# EUROPÄISCHE PATENTSCHRIFT

(11) **EP 2 665 899 B1**
(45) Veröffentlichungstag und Bekanntmachung des Hinweises auf die Patenterteilung: **19.07.2017**
(21) Anmeldenummer: 12700791.2
(22) Anmeldetag: 19.01.2012
(51) Int. Cl.: F02C 7/24, F01D 25/30, F02K 1/00, F02K 1/82

(54) **VERFAHREN ZUR HERSTELLUNG EINES SCHALLABSORBERS, INSBESONDERE FÜR EINEN GASTURBINENABGASKONUS**
METHOD FOR THE PRODUCTION OF A SOUND ABSORBER, ESPECIALLY FOR A GAS TURBINE EXHAUST CONE
PROCÉDÉ DE FABRICATION D'UN ABSORBEUR ACOUSTIQUE, EN PARTICULIER POUR UN CÔNE D'ÉCHAPPEMENT DE TURBINE À GAZ

(30) Priorität: 19.01.2011 DE 102011008922
(43) Veröffentlichungstag der Anmeldung: 27.11.2013
(73) Patentinhaber: Rolls-Royce Deutschland Ltd & Co KG, 15827 Blankenfelde-Mahlow (DE)
(72) Erfinder: TODOROVIC, Predrag, 10437 Berlin (DE)
(74) Vertreter: Hoefer & Partner Patentanwälte mbB
(86) Internationale Anmeldenummer: PCT/EP2012/000244
(87) Internationale Veröffentlichungsnummer: WO 2012/097999

(56) Entgegenhaltungen:
- EP-A2- 1 391 597
- US-A- 3 072 225
- US-A- 4 064 961
- US-A- 5 013 613
- US-A1- 2007 256 889

## Beschreibung

Die Erfindung bezieht sich auf ein Verfahren zur Herstellung eines Schallabsorbers, insbesondere für einen Gasturbinenabgaskonus, welcher am Ausströmbereich einer Gasturbine angeordnet ist.

Bei Gasturbinen für Flugzeugtriebwerken ist es erforderlich, das Geräuschniveau zu senken. Zu diesem Zweck sind auch unterschiedliche Maßnahmen bekannt, um das aus einer Abströmdüse stromab der Turbine austretende Gasstrahlgeräusch zu minimieren.

Aus dem Stand der Technik ist es bekannt, niedrige Frequenzen, die sich insbesondere bei Triebwerken mit Magerverbrennung ergeben, zu dämpfen. Eine Geräuschdämpfung erfolgt dabei über einen Helmholtz-Resonator. Es ist bekannt, in dem Anströmbereich des Abgaskonus einen derartigen Helmholtz-Resonator auszubilden, während der stromab liegende Endbereich des Abgaskonus lediglich als geometrischer Körper ausgebildet ist. Bekannte Helmholtz-Resonatoren werden dabei als System von radialen Wänden und inneren zylindrischen Führungen ausgestaltet und in Abhängigkeit von den Frequenzen dimensioniert.

Bei den bekannten Konstruktionen erweist es sich als nachteilig, dass diese im Hinblick auf die auftretenden Gastemperaturen mechanisch stark belastet sind und deshalb Verstärkungselemente erfordern. Dies führt zu einer ein relativ hohes Gewicht aufweisenden Konstruktion, auch bedingt durch unterschiedliche Wandungen und Versteifungselemente. Zusätzlich ergibt sich eine sehr aufwendige Fertigung. Die Herstellungskosten werden auch noch durch interne Akustik-Maßnahmen (Perforationen oder Ähnliches) erhöht. Auch die axiale Länge eines derartigen Resonators erfordert einen erheblichen Bauraum und bringt zusätzliches Gewicht.

Aus der DE 10 2004 053 383 A1 ist ein akustischer Absorber bekannt, bei welchem durch Faltung flacher Halbzeuge dreidimensionale Wabenstrukturen gebildet werden. Diese Vorgehensweise ist aufwendig und kostenintensiv und gestattet es nicht, optimale Strukturen zur Schallabsorption bereitzustellen.

Die US-A-5013613 zeigt eine ringförmige, achsensymmetrische Wabenstruktur, welche aus einzelnen wellenartig umgeformten Blechteilen aufgebaut ist. Die Blechteile weisen jeweils unterschiedliche Teilungen der Wellen auf, welche im Verhältnis 1 zu 4 ausgebildet sind, sodass sich unterschiedliche Abstände der einzelnen Wellen ergeben. Eine derartige Herstellung ist kostenintensiv, da unterschiedliche Werkzeuge benötigt werden und erfordert beim Zusammenbau einen zusätzlichen Aufwand, da es im Hinblick auf den Gesamtumfang und die Konvergenz bzw. Divergenz der umzuformenden Bereiche kaum möglich ist, diese passgenau übereinander zu fügen.

Aus der EP-A-1391597 ist ein Gasturbinenabgaskonus bekannt, bei welchem zwischen einer äußeren und einer inneren Wandung eine Wabenstruktur angeordnet werden kann, deren Aufbau im Einzelnen nicht beschrieben ist.

Der Erfindung liegt die Aufgabe zugrunde, einen Gasturbinenabgaskonus der eingangs beschriebenen Art zu schaffen, welcher bei einfachem Aufbau und hoher Dämpfungswirkung kostengünstig herstellbar ist und ein geringes Gewicht aufweist. Weiterhin liegt der Aufgabe zugrunde, ein Verfahren zur Herstellung eines mit einer Wabenstruktur versehenen Gasturbinenabgaskonus zu schaffen.

Erfindungsgemäß wird die Aufgabe durch die Merkmalskombinationen der unabhängigen Ansprüche gelöst, die jeweiligen Unteransprüche zeigen weitere vorteilhafte Ausgestaltungen der Erfindung.

Erfindungsgemäß ist somit ein Verfahren zur Herstellung eines Schallabsorbers, insbesondere für einen Gasturbinenabgaskonus geschaffen, dessen Außenwandung mit einer Vielzahl von Ausnehmungen versehen ist. Diese Ausnehmungen können in unterschiedlichster Ausgestaltungsform ausgebildet sein, es ist möglich, eine große Anzahl an kleinen Ausnehmungen vorzusehen. Weiterhin können auch größere Ausnehmungen vorgesehen sein. Dies richtet sich nach der zu absorbierenden Schallfrequenz.

Der in dem erfindungsgemäßen Schallabsorber (Gasturbinenabgaskonus) realisierte akustische Absorber sieht weiterhin vor, dass an der Innenseite der Außenwandung des Gasturbinenabgaskonus eine Wabenstrukturschicht angeordnet ist, welche sich entlang der Innenseite der Außenwandung erstreckt. Weiterhin ist erfindungsgemäß vorgesehen, dass sich im Wesentlichen parallel zur Außenwandung eine mit der Wabenstrukturschicht verbundene Innenwandung erstreckt. Somit ist der Gasturbinenabgaskonus (akustischer Absorber) doppelwandig ausgebildet.

Erfindungsgemäß ist die Wabenstrukturschicht aus strukturierten Ringelementen aufgebaut, welche jeweils parallel zu einer Ebene angeordnet sind, welche senkrecht zu einer zentrischen Achse der Gasturbine angeordnet ist. Die einzelnen strukturierten Ringelemente sind mit benachbarten Ringelementen zur Ausbildung einer radiale Waben aufweisenden Wabenstrukturschicht verbunden.

Erfindungsgemäß ist somit ein Schallabsorber geschaffen, der sowohl zylindrisch als auch insbesondere konisch ausgebildet ist und eine Wabenstrukturschicht aufweist, deren Waben jeweils radial ausgerichtet sind.

Erfindungsgemäß ist es somit möglich, komplexe Strukturen von akustischen Absorbern zu realisieren, nämlich sowohl zylindrische als auch konische oder in sonstiger Weise strukturierte Formen der Wabenstrukturschicht. Weiterhin ist es möglich, die radiale Länge der Waben gezielt auszubilden und die Waben so zu gestalten, dass deren Querschnitt in radialer Richtung im Wesentlichen gleich bleibt. Somit ist es auch möglich, sehr tiefe, sich über einen erheblichen radialen Weg erstreckende Waben bei einem derartigen erfindungsgemäßen akustischen Absorber vorzusehen.

Ein weiterer, wesentlicher Vorteil der erfindungsgemäßen Ausgestaltung liegt darin, dass die Wabenstrukturschicht spannungsfrei hergestellt werden kann, so dass sich beim Betrieb, insbesondere bei thermischen Belastungen, die Rissgefahr erheblich reduzieren lässt.

Durch den erfindungsgemäßen Aufbau ist es weiterhin insbesondere möglich, eine Optimierung der akustischen Absorption zu gewährleisten, ohne die Außenform des Gasturbinenabgaskonus bzw. des akustischen Absorbers verändern zu müssen.

Ein weiterer wesentlicher Vorteil der erfindungsgemäßen Ausgestaltung liegt darin, dass die Wabenstrukturschicht aus unterschiedlichen Werkstoffen herstellbar ist, sowohl aus metallischen als auch aus nicht-metallischen Werkstoffen.

Besonders günstig ist es, wenn erfindungsgemäß die einzelnen Ringelemente mit einer gleichen, die Wabenstruktur der Wabenstrukturschicht bildenden Strukturierung versehen sind. Hierdurch ergibt sich bei der Herstellung der Vorteil, dass im Wesentlichen gleiche Ringelemente verwendet werden können, die mittels eines einzigen Umformwerkzeugs herstellbar sind. Die einzelnen Ringelemente brauchen nachfolgend lediglich in Umfangsrichtung zueinander versetzt angeordnet werden, um die Wabenstrukturschicht zu bilden.

In diesem Zusammenhang ist darauf hinzuweisen, dass unter "Wabenstruktur" eine honigwabenartige Struktur zu verstehen ist, welche in benachbarten Ebenen eine dichteste Packung von Kammern oder Ausnehmungen vorsieht. Der Querschnitt ist nicht auf sechseckige Strukturen beschränkt, vielmehr kann die Strukturierung auch wellenförmig oder in anderer Weise ausgebildet sein.

In bevorzugter Ausgestaltung der Erfindung sind die Ringelemente als Blechumformteile ausgebildet. Zur Ausbildung komplexer Gesamtstrukturen, beispielsweise einer konischen Gesamtform, sind benachbarte Ringelemente jeweils mit einem unterschiedlichen Außenradiums und/oder Innenradius versehen.

In besonders günstiger Ausgestaltung der Erfindung ist vorgesehen, dass der akustische Absorber/Gasturbinenabgaskonus mit zwei oder mehr Wabenstrukturschichten versehen ist, welche in radialer Richtung übereinanderliegen und unterschiedliche Frequenzen absorbieren. Somit lässt sich eine Geräuschdämpfung sowohl durch Helmholtz-Resonatoren als auch nach dem λ/4-Prinzip realisieren.

Hinsichtlich des erfindungsgemäßen Verfahrens zur Herstellung des akustischen Absorbers bzw. des Gasturbinenabgaskonus ist vorgesehen, dass dieser bevorzugt achsensymmetrisch ausgebildet ist. Einzelne Blechteile werden mittels eines Umformverfahrens zu einer wellenartigen oder teilwabenartigen Struktur umgeformt. Die so erhaltenen Ringelemente oder Teilringelemente werden dabei hinsichtlich der Strukturierung im Wesentlichen gleich umgeformt und ausgebildet. Benachbarte Blechteile werden zur Bildung der Wabenstruktur gegeneinander versetzt angeordnet und miteinander gefügt.

Die einzelnen Blechteile können entweder vor ihrer Umformung oder nach der Umformung zugeschnitten werden, um beispielsweise in Radialrichtung unterschiedliche Abmessungen aufzuweisen, um beispielsweise einen konischen Körper des akustischen Absorbers zu bilden.

Erfindungsgemäß ist es möglich, die einzelnen umgeformten, strukturierten Blechteile oder Ringelemente zu verschweißen, zu verkleben oder in sonstiger Weise zu fügen.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine perspektivische Teilansicht eines ersten Ausführungsbeispiels eines erfindungsgemäßen Gasturbinenabgaskonus mit akustischem Absorber,
- Fig. 3: eine Ansicht, ähnlich Fig. 2, eines weiteren Ausführungsbeispiels,
- Fig. 4: eine schematische Darstellung des Aufbaues und der Herstellung der erfindungsgemäßen Wabenstrukturschicht,
- Fig. 5: eine vereinfachte Darstellung eines zu verwendenden Umformwerkzeugs,
- Fig. 6 bis 8: vereinfachte Darstellungen unterschiedlicher Strukturierungen der Ringelemente zur Ausbildung der Wabenstrukturschicht.

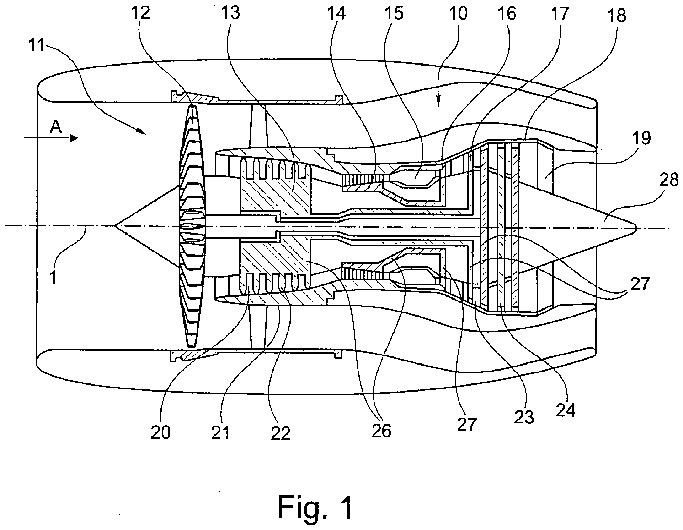

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, Brennkammern 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Zwischendruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

Die Fig. 1 zeigt weiterhin einen Abgaskonus 28, welcher stromab der Turbine angeordnet ist und entlang welchem der austretende Abgasstrahl strömt.

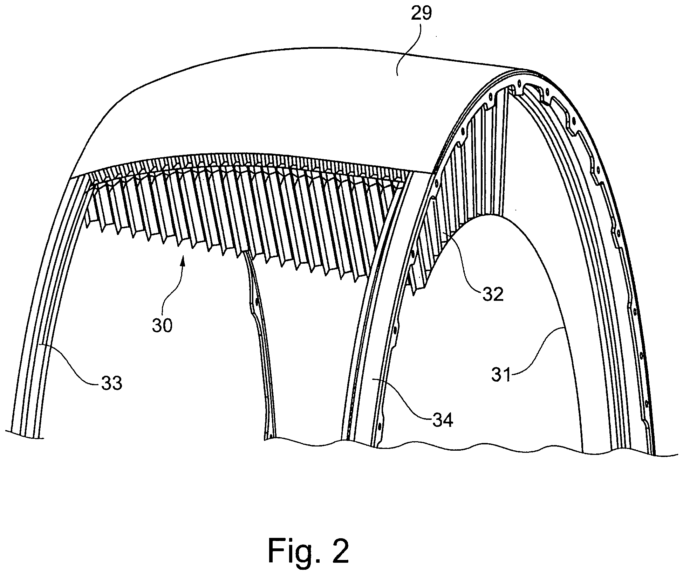

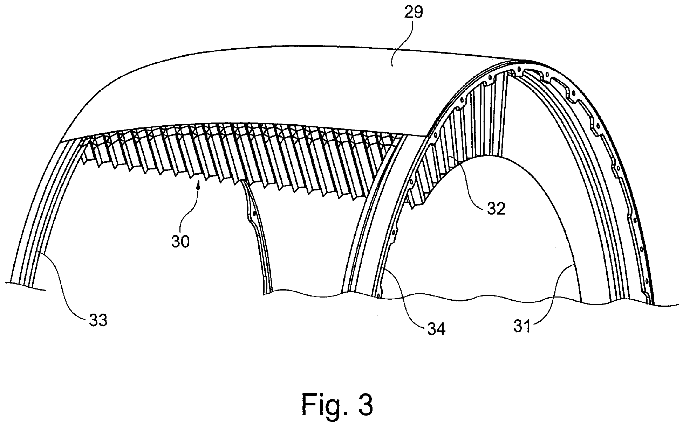

Die Fig. 2 und 3 zeigen jeweils perspektivische Teilansichten unterschiedlicher Ausführungsbeispiele des erfindungsgemäßen Abgaskonus. Dabei ist eine Außenwandung 29 vorgesehen, welche mit einer Vielzahl im Einzelnen nicht dargestellter Ausnehmungen zum Schalleintritt versehen ist. Im Wesentlichen parallel zur Außenwandung 29 erstreckt sich eine Innenwandung 31, welche einen Innenraum des Gasturbinenabgaskonus bzw. des akustischen Absorbers begrenzt.

In dem Zwischenraum zwischen der Außenwandung 29 und der Innenwandung 31 ist zumindest eine Wabenstrukturschicht 30 vorgesehen, welche aus einzelnen Ringelementen 32 aufgebaut ist, so wie dies nachfolgend noch beschrieben wird.

Bei dem Ausführungsbeispiel der Fig. 2 ist eine doppelschichtige Wabenstrukturschicht 30 vorgesehen, welche größere und längere radial innen angeordnete Waben umfasst sowie eine dünnere Schicht kleinerer Waben, die radial außerhalb der inneren Schicht, angrenzend an die Außenwandung 29 ausgebildet ist.

Die Fig. 3 zeigt ein Ausführungsbeispiel mit nur einer Wabenstrukturschicht in analoger Darstellung gemäß Fig. 2.

Die Fig. 2 und 3 zeigen jeweils einen vorderen Flansch 33 sowie einen hinteren Flansch 34, welche zur Lagerung des Gasturbinenabgaskonus sowie zur Erzeugung einer stabilen Gesamtstruktur dienen, so wie dies aus dem Stand der Technik bekannt ist.

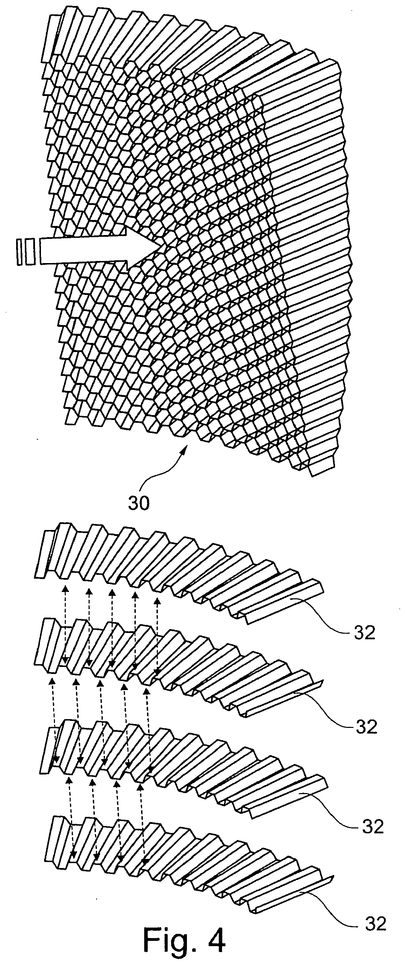

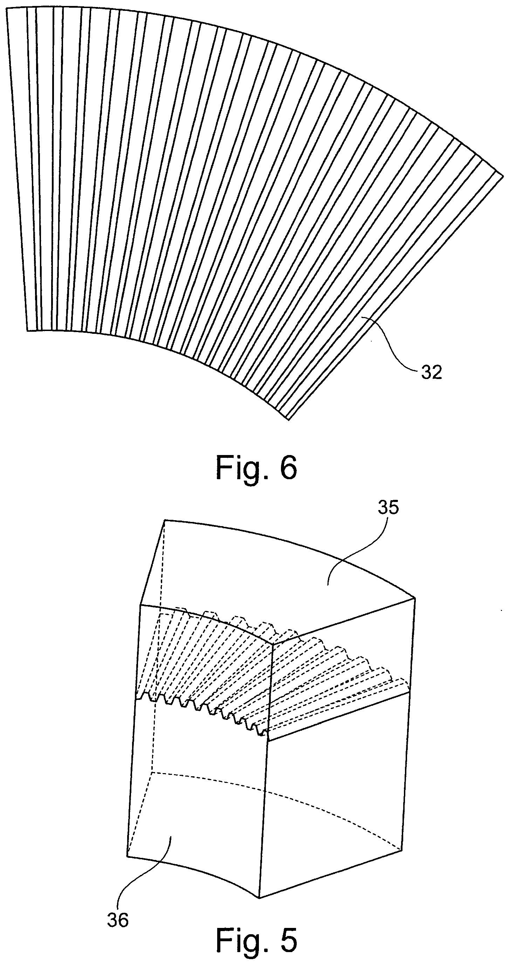

Die Fig. 4 zeigt in beispielhafter Darstellung den Aufbau der erfindungsgemäßen Wabenstrukturschicht 30. Diese besteht aus einzelnen Ringelementen 32, welche teilringförmig oder auch als vollständiger Ring ausgebildet sein können. Die Strukturierung der einzelnen Ringelemente 32 ist gleich. Durch einen geringfügigen Versatz in Umfangsrichtung (bezogen auf die Gesamtstruktur des Gasturbinenabgaskonus und die zugrundeliegende Triebwerksachse bzw. zentrische Achse 1) ergibt sich die in der rechten Bildhälfte der Fig. 4 dargestellte Wabenstruktur. Durch Bemessung der jeweiligen radialen Längen der einzelnen Ringelemente 32 ist es möglich, zylindrische oder konische oder ballige oder andere geometrische Gesamtgestaltungen zu erzeugen. Hierzu werden die einzelnen Ringelemente 32 in radialer Richtung entweder nach dem Umformvorgang beschnitten, beispielsweise mittels eines Laserschneidverfahrens, oder es werden mittels des noch zu beschreibenden Umformwerkzeugs (Fig. 5) unterschiedliche Blech-Zuschnitte zu den Ringelemente 32 umgeformt.

Aus der Fig. 4, rechte Hälfte, ist insbesondere ersichtlich, dass die Wabenstruktur ähnlich einer Honigbienenwabe, ausgebildet ist und einzelne Waben erfasst, die sich in radialer Richtung erstrecken und eine im Wesentlichen gleichbleibende Form aufweisen. Es versteht sich, dass der Innendurchmesser der Waben radial zunimmt, so wie dies in Fig. 4 ersichtlich ist.

Das Fügen der einzelnen Ringelemente 32 kann durch Schweißen, Kleben, Löten oder in anderer Weise erfolgen.

Die Fig. 5 zeigt eine schematische Darstellung eines Umformwerkzeugs mit einem oberen Werkzeug 35 und einem unteren Werkzeug 36. Es versteht sich, dass das gesamte Umformwerkzeug entweder teilringartig oder als geschlossener Ring ausgebildet sein kann. Im Zusammenhang mit der Darstellung der Fig. 4 ergibt sich, dass mittels eines einzigen Umformwerkzeugs die einzelnen Ringelemente 32 hergestellt werden können, die zum Aufbau einer komplexen dreidimensionalen Struktur (beispielsweise konisch) benötigt werden.

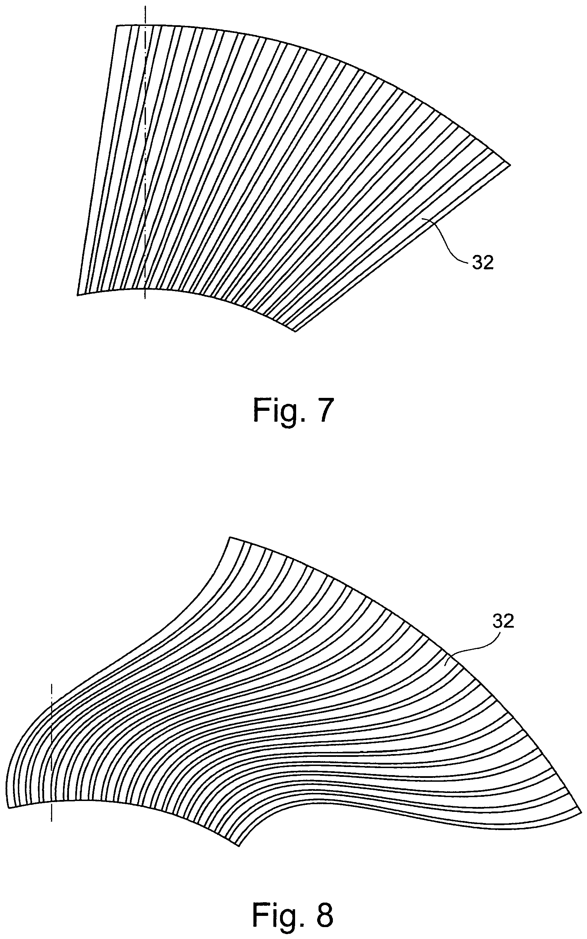

Die Fig. 6 bis 8 zeigen jeweils unterschiedliche Ausgestaltungen der Strukturierungen und der sich daraus ergebenden Innenkammern der Wabenstrukturschicht 30. In Fig. 6 ist eine klassische radiale Ausgestaltung dargestellt, während die Fig. 7 eine winkelmäßig versetzte Ausgestaltung, und die Fig. 8 eine kurvenförmige Ausgestaltung zeigen. Es ist somit beispielsweise möglich, die Gesamtlänge der zur Verfügung stehenden Waben der Wabenstruktur 30 durch eine gebogene oder winkelmäßig ausgebildete Struktur (Fig. 7 und 8) zu variieren.

### Bezugszeichenliste:

- 1: Triebwerksachse / zentrische Achse
- 10: Gasturbinentriebwerk
- 11: Lufteinlass
- 12: im Gehäuse umlaufender Fan
- 13: Zwischendruckkompressor
- 14: Hochdruckkompressor
- 15: Brennkammern
- 16: Hochdruckturbine
- 17: Zwischendruckturbine
- 18: Niederdruckturbine
- 19: Abgasdüse
- 20: Leitschaufeln
- 21: Triebwerksgehäuse / Verkleidung
- 22: Kompressorlaufschaufeln
- 23: Leitschaufeln
- 24: Turbinenschaufeln
- 26: Kompressortrommel oder -scheibe
- 27: Turbinenrotornabe
- 28: Abgaskonus
- 29: Außenwandung
- 30: Wabenstrukturschicht
- 31: Innenwandung
- 32: Ringelement
- 33: Vorderer Flansch
- 34: Hinterer Flansch
- 35: Oberes Werkzeug
- 36: Unteres Werkzeug

## Patentansprüche

1. Verfahren zur Herstellung eines eine Wabenstruktur aufweisenden Körpers für einen Schallabsorber, welcher achsensymmetrisch ausgebildet ist, wobei Blechteile mittels eines Umformverfahrens mit einer wellenartigen Strukturierung versehen und zu Ringelementen (32) umgeformt werden, **dadurch gekennzeichnet, dass** die Blechteile hinsichtlich der Strukturierung im Wesentlichen gleich umgeformt ausgebildet werden, wobei benachbarte Blechteile zur Bildung der Wabenstruktur in Umfangsrichtung gegeneinander versetzt angeordnet und miteinander gefügt werden.

2. Verfahren nach Anspruch 1, **dadurch gekennzeichnet, dass** die Blechteile in Form von Kreisringen ausgebildet werden, deren Strukturierung sich im Wesentlichen in Radialrichtung oder in einem Winkel zur Radialrichtung oder bogenförmig erstreckt.

3. Verfahren nach Anspruch 1 oder 2, **dadurch gekennzeichnet, dass** die Blechteile zur Ausbildung einer konischen Form des Körpers jeweils in Radialrichtung unterschiedliche Abmessungen aufweisen.

4. Verfahren nach einem der Ansprüche 1 bis 3, **dadurch gekennzeichnet, dass** die Blechteile verschweißt oder verklebt werden.

5. Gasturbinenabgaskonus, dessen Außenwandung (29) mit einer Vielzahl von Ausnehmungen versehen ist, mit einer an der Innenseite der Außenwandung (29) angeordneten Wabenstrukturschicht (30), welche sich entlang der Innenseite der Außenwandung (29) erstreckt, mit einer sich im Wesentlichen parallel zur Außenwandung (29) erstreckenden, mit der Wabenstrukturschicht (30) verbundenen Innenwandung (31), **dadurch gekennzeichnet, dass** die Wabenstrukturschicht (30) aus im Wesentlichen gleichen wellenartig strukturierten Ringelementen (32) aufgebaut ist, welche jeweils parallel zu einer zu einer zentrischen Achse (1) senkrechten Ebene angeordnet sind und mit benachbarten Ringelementen (32) zur Ausbildung einer radiale Waben aufweisenden Wabenstrukturschicht (30) verbunden ist,
wobei benachbarte Ringelemente (32) zur Ausbildung der Wabenstrukturschicht (30) in Umfangsrichtung zueinander versetzt angeordnet sind.

6. Gasturbinenabgaskonus nach Anspruch 5, **dadurch gekennzeichnet, dass** die Ringelemente (32) jeweils mit einer gleichen, die Wabenstruktur der Wabenstrukturschicht (30) bildenden Strukturierung versehen sind.

7. Gasturbinenabgaskonus nach Anspruch 5 oder 6, **dadurch gekennzeichnet, dass** die Ringelemente (32) als Blechumformteile ausgebildet sind.

8. Gasturbinenabgaskonus nach einem der Ansprüche 5 bis 7, **dadurch gekennzeichnet, dass** zur Ausbildung einer konischen Gesamtform der Wabenstrukturschicht (30) benachbarte Ringelemente (32) jeweils einen unterschiedlichen Außenradius und/oder Innenradius aufweisen.

9. Gasturbinenabgaskonus nach einem der Ansprüche 5 bis 8, **dadurch gekennzeichnet, dass** die Ringelemente (32) mit einer im Querschnitt über deren radiale Länge gleich geformten Strukturierung versehen sind und/oder dass die Strukturierung radial ausgebildet und angeordnet ist und sich mit zunehmendem Radius des Ringelements (32) vergrößert und/oder dass die Strukturierung in einem Winkel zur Radialrichtung ausgebildet ist und/oder dass die Strukturierung bogenförmig oder wellenförmig ausgebildet ist.

## Claims

1. Method for manufacturing a body for a sound absorber, said body being provided with a honeycomb structure and designed axis-symmetrical, with sheet-metal parts being provided with a wave-like structuring and formed to ring elements (32) by means of a forming process, **characterized in that** the sheet-metal parts are shaped and designed in a substantially identical way as regards their structuring, with adjacent sheet-metal parts being arranged offset to one another in the circumferential direction and then joined together to form the honeycomb structure.

2. Method in accordance with Claim 1, **characterized in that** the sheet-metal parts are designed in the form of circular rings, the structuring of which extends substantially in the radial direction or at an angle to the radial direction or arch-shaped.

3. Method in accordance with Claim 1 or 2, **characterized in that** the sheet-metal parts have different dimensions each in the radial direction to form a conical shape of the body.

4. Method in accordance with one of the Claims 1 to 3, **characterized in that** the sheet-metal parts are joined together by welding or bonding.

5. Gas-turbine exhaust cone, the outer wall (29) of which being provided with a plurality of recesses, with a honeycomb-structured layer (30), which is arranged on the inside of the outer wall (29) and extends along the inside of the outer wall (29), and with an inner wall (31), which is connected to the honeycomb-structured layer (30) and extends substantially parallel to the outer wall (29), **characterized in that** the honeycomb-structured layer (30) is made up of substantially identical, wave-like structured ring elements (32), which are each arranged parallel to a plane extending perpendicularly to a central axis (1), and connected to adjacent ring elements (32) in order to form a honeycomb-structured layer (30) having radial honeycombs, with adjacent ring elements (32) being arranged offset to one another in the circumferential direction to form the honeycomb-structured layer (30).

6. Gas-turbine exhaust cone in accordance with Claim 5, **characterized in that** the ring elements (32) are each provided with an identical structuring forming the honeycomb structure of the honeycomb-structured layer (30).

7. Gas-turbine exhaust cone in accordance with Claim 5 or 6, **characterized in that** the ring elements (32) are designed as shaped sheet-metal parts.

8. Gas-turbine exhaust cone in accordance with one of the Claims 5 to 7, **characterized in that** for forming a conical overall shape of the honeycomb-structured layer (30) adjacent ring elements (32) are each provided with a different outer radius and/ or inner radius.

9. Gas-turbine exhaust cone in accordance with one of the Claims 5 to 8, **characterized in that** the ring elements (32) are provided with a structuring identically shaped in cross-section over their radial length and/ or that the structuring is designed and arranged radially, and enlarges as the radius of the ring element (32) increases, and/ or that the structuring is provided at an angle to the radial direction and/ or that the structuring is designed arch-shaped or wave-like.

## Revendications

1. Procédé pour la fabrication d'un corps pour un absorbeur acoustique, ledit corps présentant une structure en nid d'abeilles et étant conçu symétriquement par rapport à un axe, sachant que les pièces en tôle sont pourvues d'une structuration ondulée et façonnées sous forme d'éléments annulaires (32) au moyen d'un procédé de façonnage, **caractérisé en ce que** les pièces en tôle sont façonnées et conçues essentiellement à l'identique en ce qui concerne leur structuration, sachant que des pièces en tôle adjacentes sont décalées les unes par rapport aux autres dans le sens circonférentiel et reliées ensemble pour former la structure en nid d'abeilles.

2. Procédé selon la revendication n° 1, **caractérisé en ce que** les pièces en tôle sont conçues sous la forme d'anneaux circulaires dont la structuration s'étend essentiellement dans le sens radial ou dans un angle par rapport au sens radial ou en forme d'arc.

3. Procédé selon la revendication n° 1 ou n° 2, **caractérisé en ce que** les pièces en tôle présentent chacune différentes dimensions dans le sens radial afin de constituer une forme conique du corps.

4. Procédé selon une des revendications n° 1 à n° 3, **caractérisé en ce que** les pièces en tôle sont reliées par soudage ou collage.

5. Cône d'échappement de turbine à gaz dont la paroi extérieure (29) est pourvue d'une multitude d'évidements avec une couche à structure en nid d'abeilles (30) disposée sur la face interne de la paroi extérieure (29), laquelle couche s'étend le long de la face interne de la paroi extérieure (29), et avec une paroi intérieure (31) reliée à la couche à structure en nid d'abeilles (30) et s'étendant essentiellement parallèlement à la paroi extérieure (29), **caractérisé en ce que** la couche à structure en nid d'abeilles (30) est constituée d'éléments annulaires (32) essentiellement identiques avec une structuration ondulée, qui sont disposés chacun parallèlement à un plan perpendiculaire à un axe central (1), et qu'elle est reliée à des éléments annulaires adjacents (32) pour former une couche à structure en nid d'abeilles (30) présentant des alvéoles radiales, sachant que des éléments annulaires adjacents (32) sont décalés les uns par rapport aux autres dans le sens circonférentiel pour former la couche à structure en nid d'abeilles (30).

6. Cône d'échappement de turbine à gaz selon la revendication n° 5, **caractérisé en ce que** les éléments annulaires (32) sont pourvus chacun d'une structuration identique, formant la structure en nid d'abeilles de la couche à structure en nid d'abeilles (30).

7. Cône d'échappement de turbine à gaz selon la revendication n° 5 ou n° 6, **caractérisé en ce que** les éléments annulaires (32) sont constitués sous la forme de pièces de tôle façonnées.

8. Cône d'échappement de turbine à gaz selon une des revendications n° 5 à n° 7, **caractérisé en ce que**, pour former une forme globale conique de la couche à structure en nid d'abeilles (30), des éléments annulaires adjacents (32) présentent chacun un rayon extérieur et/ ou un rayon intérieur différent.

9. Cône d'échappement de turbine à gaz selon une des revendications n° 5 à n° 8, **caractérisé en ce que** les éléments annulaires (32) sont pourvus d'une structuration formée à l'identique en coupe sur leur longueur radiale et/ ou que la structuration est constituée et disposée radialement et s'agrandit à mesure que croît le rayon de l'élément annulaire (32) et/ ou que la structuration est constituée dans un angle par rapport au sens radial et/ ou que la structuration présente une forme d'arc ou une forme ondulée.
